# EUROPEAN PATENT APPLICATION

(11) **EP 2 860 673 A1**
(43) Date of publication of application: **15.04.2015**
(21) Application number: 13188588.1
(22) Date of filing: 14.10.2013
(51) Int. Cl.: G06Q 10/02, G06Q 50/28, G06Q 50/30

(54) **Server and method for matching a demand request for a transport capacity with supply requests**

(71) Applicant: Chaillie, Patrick, 81675 München (DE)
(72) Inventor: Schmidt, Philipp, 10715 Berlin (DE); Chaillié, Patrick, 81675 Munich (DE)
(74) Representative: Horn Kleimann Waitzhofer

(57) **Abstract**

A server for matching a demand request for a transport capacity for freight from an inquirer with at least one supply request for offering the transport capacity from a supplier is suggested. The server includes a receiving entity, an allocating entity, and a matching entity. The receiving entity is configured for receiving supply requests from a plurality of suppliers and for receiving a demand request from the inquirer. A respective supply request of the received supply requests includes a geographic indication indicating a departure area or a destination area of the supplier. A received demand request includes a geographic position indicating a departure point or a destination point of the freight. The storing entity is configured for storing a plurality of entries, wherein each of the entries includes a certain geographic position and different administrative levels allocated to the certain geographic position.

## Description

### FIELD OF THE INVENTION

The invention relates to a server and to a method for matching a demand request for a transport capacity for goods or for passengers (freight) from an inquirer with at least one supply request for offering the transport capacity from a supplier.

Such a server for matching demand requests with supply requests may be an online transport platform for goods and/or passengers.

While matching a demand request (short: demand) and a supply request (short: supply) for a transport capacity of freight, e.g. goods and/or passengers, there is the necessity to consider different preferences from different types of market participants, like inquirers, e.g. passengers or owners of goods, and suppliers, e.g. hauliers, carriers, conveyors, or bus operators. For example, while for a passenger or a shipment of goods, both the departure and the destination already define these points (point-to-point), this may not be true for the supplier of the transport capacity. While the point of departure of the suppliers may be determined by the physical location of its transport means, like a truck or a bus, the point of destination may be very flexible, depending mostly on the requirements of his customers (point-to-area). Bus operators instead may be interested to collect passengers from a certain area and transport them to a specific city (area-to-point) or even to a certain region (area-to-area).

Existing online platforms for such a matching of transport intermediation may provide a matching of a departure point and a destination point only (point-to-point). In a lot of cases, a zip code is required for that. Alternatively, the market participants may be required to actively select a certain level associated to a certain position from a dropdown list in order to meet the demand of the other participant.

Conventional techniques for matching a demand request for a transport capacity with corresponding supply requests are known from DE 10 2006 000643 A1, US 7,080,019 B1, EP 1986169 A1, US 2011/0145089 A1, US 2011/0313804 A1, US 2004/0267449 A1, US 2008/0091342 A1, DE 20 2005 016720 O1, WO 2009/091258 A1 and US 2009/0192851 A1.

Moreover, in the present technical field of transport, it is known that a high ratio of transport means, like busses and trucks, travel while being empty or nearly empty. As a result, a huge amount of fuel is wasted and carbone dioxide emissioned without any effect of transporting freight, like passengers or goods.

Accordingly, it is an aspect of the present invention to reduce the total amount of empty trips and to improve capacity usage and therefore reducing fuel consumption for and environmental impact of transporting freight in a country.

### BRIEF SUMMARY OF THE INVENTION

According to a first aspect, a server for matching a demand request for a transport capacity for freight from an inquirer with at least one supply request for offering the transport capacity from a supplier is suggested. The server includes a receiving entity, an allocating entity, and a matching entity. The receiving entity is configured for receiving supply requests from a plurality of suppliers and for receiving a demand request from the inquirer. A respective supply request of the received supply requests includes a geographic indication indicating a departure area or a destination area of the supplier. A received demand request includes a geographic position indicating a departure point or a destination point of the freight. The storing entity is configured for storing a plurality of entries, wherein each of the entries includes a certain geographic position and different administrative levels allocated to the certain geographic position. The allocating entity is configured for allocating the geographic position included in the received demand request to one entry in the storing entity. The matching entity is configured for matching the entry allocated to the geographic position with the geographic indication of each of the received supply requests for providing a matching result between the received demand request and the received supply requests.

The present server may be also called online transport platform and provides an improved matching between demand requests and supply requests, in particular because of not only using a geographic position for the departure or destination of the freight, but automatically using different administrative levels allocated to the certain geographic position of the freight.

Further, suppliers are very familiar with administrative levels, like districts, counties, regions, provinces, and countries as well as postal code areas. Because of this familiarity, suppliers may finally generate online offers of transport capacity that reflect their real interest. Their potential interest is not being limited to certain geographical points (with or without an enhanced perimeter) but to widen their offer of transport capacity to a broader polygon of one or more administrative areas and/or administrative levels. In doing so the probability increases that there are more and improved matches of the demand requests to the supply requests. The former are generally related to positions rather than areas while the latter may well be related to areas instead.

This increased probability of more and better matches leads to improving overall usage of transport capacity (e.g. avoiding empty runs) and therefore results in reducing fuel consumption and carbon dioxide footprint for transporting on a microeconomic as well as on a macroeconomic scale.

The server may be an online transport platform which is connectable to I/O devices or end devices of the inquirers and the suppliers via a communication network. The communication network may be the internet, for example. For communicating with said server over the communication network, the inquirers and the suppliers may use said I/O devices, e.g. a remote terminal, like a smartphone, or a computer, like a PC:

The present server uses a point-to-area matching, wherein at least one of the departure and destination of the supplier is input as an area, i.e. administrative level. This area is matched with an entry of the storing entity allocated to the geographic position of the demand request of the inquirer. According to some implementations, the administrative level (also administrative geographical level) may be defined of 0. order (country), first order (provinces, states) or second order (county, district).

The freight may be goods or passengers. The supplier may offer the transport capacity by a certain transport means, like one or more trucks, buses, planes, or ships.

Further, the following example may emphasize the advantages of the present server:
a) The demand side (inquirer) may define its departure point and destination point of the freight.
b) The supply side (supplier) may select an administrative level (administrative area) instead of choosing a perimeter around a given position as its required departure or destination or both. This is especially of advantage, when administrative areas do not appear like a circle with a given epicenter.
c) The supply side may as well widen the departure and/or destination area choosing not only one but many administrative levels combining even different administrative levels vertically, while maintaining just one single bid.
d) The demand side and the supply side are matched regardless of their preferences for level of geographical detail.

The server is a system (software and suitable computer hardware) that responds to requests across a computer network to provide, or help to provide, a network service, here the matching. Servers may be run on a dedicated computer or on a plurality of computers.

In an embodiment, each of the different administrative levels allocated to the certain geographic position includes the specific geographic position.

In this embodiment, each administrative level is an abstraction of the certain geographic position. In particular, the different administrative levels are ordered such that the i-th administrative level includes the (i+1)-th administrative level. For example, a higher order administrative level, e.g. first order, includes the low order administrative level, e.g. second order. In detail, if the certain geographic position is Boston, Boston is included in Suffolk County, which is included in Massachusetts, which is included in the USA, which is included in North America. As a further example, if the certain geographic position is Oklahoma City, Oklahoma City is included in Oklahoma County, which is included in Oklahoma, which is included in the USA, which is included in North America.

In a further embodiment, the receiving entity is configured to receive supply requests from a plurality of suppliers, wherein the respective supply request of the received supply requests includes a first geographic indication indicating a departure area of the supplier and a second geographic indication indicating a destination area of the supplier, and to receive a demand request from the inquirer, wherein the received demand request includes a first geographic position indicating a departure point of the freight and a second geographic position indicating a destination point of the freight.

In this embodiment, the respective supply request includes the departure area and the destination area of the supplier. Thus, the present embodiment provides a double point-to-area matching for demand requests and supply requests.

In a further embodiment, the receiving entity is configured to receive supply requests from a plurality of suppliers, wherein the respective supply request of the received supply requests includes a first geographic indication indicating a departure point of the supplier and a second geographic indication indicating a destination area of the supplier, and to receive a demand request from the inquirer, wherein the received demand request includes a first geographic position indicating a departure point of the freight and a second geographic position indicating a destination point of the freight.

In this embodiment, the supply request includes a departure point and a destination area. Here, there is a single point-to-area mapping between the destination point of the inquirer and the destination area of the supplier.

In a further embodiment, the receiving entity is configured to receive supply requests from a plurality of suppliers, wherein the respective supply request of the received supply requests includes a first geographic indication indicating a departure area of the supplier and a second geographic indication indicating a destination point of the supplier, and to receive a demand request from the inquirer, wherein the received demand request includes a first geographic position indicating a departure point of the freight and a second geographic position indicating a destination point of the freight.

In this embodiment, the supply request includes a departure area and a destination point. Here, there is only a single point-to-area mapping between the destination point of the inquirer and the destination area of the supplier.

In a further embodiment, the allocating entity includes first allocating means and second allocating means, wherein the first allocating means are configured to allocate the first geographic position to a first entry in the storing entity, and wherein the second allocating means are configured to allocate the second geographic position to a second entry in the storing entity.

Here, both geographic positions for destination and departure are allocated to an entry in the storing entity, e.g. a database. So both entries may be used for the matching entity for matching departure and destination of demand and supply requests.

In a further embodiment, the matching entity includes first matching means and second matching means, wherein the first matching means are configured to match the first entry allocated to the first geographic position with the first geographic indication of each of the received supply requests, and wherein the second matching means are configured to match the second entry allocated to the second geographic position with the second geographic indication of each of the received supply requests.

In this embodiment, both allocated entries are matched to the respective geographic position for departure and destination.

In a further embodiment, for each entry, the storing entity is configured to store the certain geographic position and a hierarchy of the different administrative levels allocated to the certain geographic position.

In this embodiment, the different administrative levels are ordered in a certain hierarchy which may be used for the matching internally. So, the customers like inquirers or freight owners are not required to actively use any dropdown list

In a further embodiment, the hierarchy allocated to the certain geographic position includes at least three different administrative levels.

In this embodiment with at least three different administrative levels, the probability of a proper matching is increased.

In a further embodiment, for each entry, the storing entity is configured to store the geographic position, the different administrative levels allocated to the certain geographic position and at least one neighboring administrative level adjoining to at least one of the different administrative levels allocated to the certain geographic position.

In this embodiment, also neighboring administrative levels may be used for improving the matches for the suppliers and therefore for increasing their ratio between full transport means and empty transport means.

In a further embodiment, the geographic indication included in the supply request includes at least a full name of the geographic indication.

In a further embodiment, the geographic indication included in the supply request includes at least a zip code of the geographic indication.

In a further embodiment, the geographic indication included in the supply request includes at least a part of a zip code of the geographic indication, in particular a sequence of the first numbers of the zip code.

Because the destinations and departures of the suppliers are ordered to positions and several administrative levels allocated to such positions, it is presently effectual to input at least a part of a zip code, in particular the first numbers of the zip code. This enhances the probability of proper matches.

In a further embodiment, the storing entity includes a first database for storing the received demand requests and matched supply requests, a second database for storing the plurality of entries, and a querying entity which is configured to query the first database firstly and, if negative, the second database secondly.

In a further embodiment, the server is connectable to clients embodying the inquirer and the suppliers via a communication network.

Any embodiment of the first aspect may be combined with any embodiment of the first aspect to obtain another embodiment of the second aspect.

According to a second aspect, a method for matching a demand request for a transport capacity from an inquirer with at least one supply request for offering the transport capacity from a supplier is suggested. In a first step, a plurality of entries is stored in a storing entity, like a database. Each of the entries includes a certain geographic position and different administrative levels allocated to the certain geographic position. In a second step, supply requests are received from a plurality of suppliers, wherein a respective supply request of the received supply requests includes a geographic indication indicating a departure area or a destination area of the supplier. In a third step, a demand request is received from the inquirer, wherein the received demand request includes a geographic position indicating a departure point or a destination point of the freight. In a fourth step, the geographic position included in the received demand request is allocated to one entry in the storing entity. In a fifth step, the entry allocated to the geographic position is matched with the geographic indication of each of the received supply requests for providing a matching result between the received demand request and the received supply requests.

According to a third aspect, the invention relates to a computer program comprising a program code for executing the method of the second aspect for matching a demand request for a transport capacity from a inquirer with at least one supply request for offering the transport capacity from a supplier when run on at least one computer.

In the following, exemplary embodiments of the present invention are described with reference to the enclosed figures.

### BRIEF DESCRIPTION OF THE DRAWINGS

Fig. 1 shows a system including a server for matching demand requests with supply requests and clients coupled to the server;
Fig. 2 shows an embodiment of a server for matching demand requests and supply requests of Fig. 1;
Fig. 3 shows a schematic block diagram of an entry of the storing entity of Fig. 2;
Fig. 4 shows a schematic block diagram of an embodiment of a supply request;
Fig. 5 shows a schematic block diagram of an embodiment of a demand request;
Fig. 6 shows an embodiment of a sequence of method steps for matching demand requests with supply requests; and
Fig. 7 shows a map of the United States illustrating a match of a demand request for a transport capacity with a supply request for offering the transport capacity.

Similar or functionally similar elements in the figures have been allocated the same reference signs if not otherwise indicated.

### DETAILED DESCRIPTION OF THE EMBODIMENTS

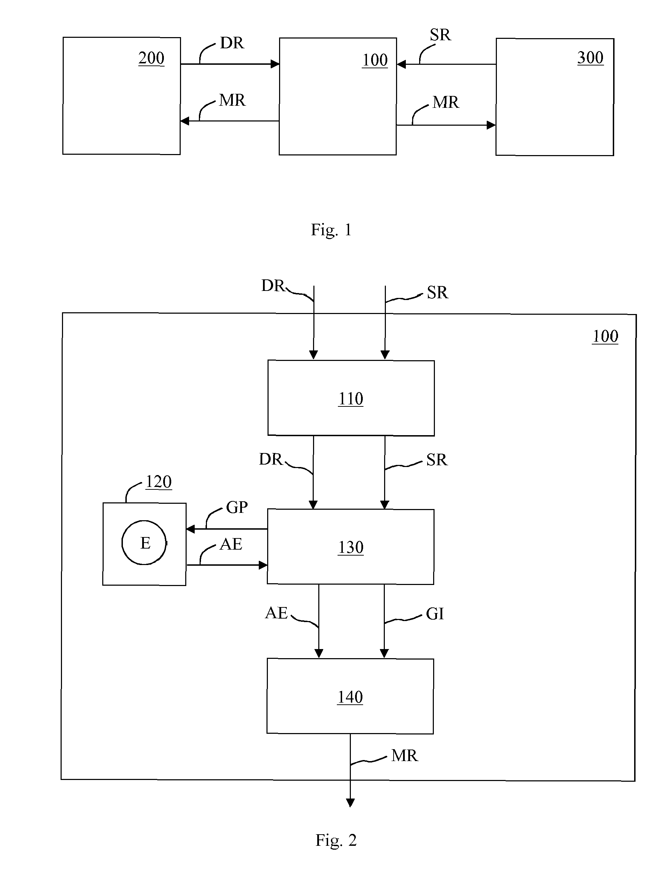

In Fig. 1, a system is shown which includes a server 100 and coupled clients 200, and 300. The clients 200, 300 are coupled to the server over a communication network (not shown). An example for such a communication network is the internet.

For example, the client 200 is a client used by an inquirer and the client 300 is a client used by a supplier. In the following, the clients 200, 300 may be referenced as inquirer 200 and supplier 300.

The inquirer 200 transmits a demand request DR for transport capacity for transporting certain freight, like goods or a passenger(s), over the communication network to the server 100. The supplier 300 transmits a supply request SR for offering such a transport capacity over the communication network to the server 100. Both, the demand request DR and the supply request SR include a destination and a departure. Further, the demand request DR includes an indication indicating a request for a certain transport. Further, the supply request SR includes an indication indicating a certain transport capacity for its departure and destination. The server 100 is configured to match the demand request DR for a certain transport capacity from an inquirer 200 with at least one supply request SR for offering to transport capacity from a supplier 300.

Without loss of generality, Fig. 1 shows one inquirer 200 and one supplier 300. Of course, there may be a plurality (e.g. several thousands) of inquirers 200 and suppliers 300.

Fig. 2 shows an embodiment of such a server 100 of Fig. 1. The server 100 of Fig. 2 comprises a receiving entity 110, a storing entity 120, an allocating entity 130 and a matching entity 140.

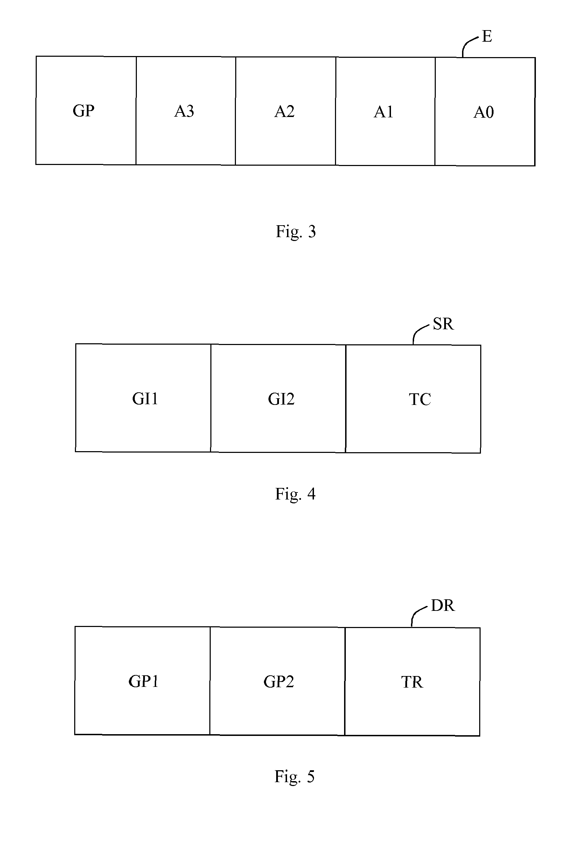

The receiving entity 130 is configured to receive supply requests SR from a plurality of suppliers 200. Each supply request SR of the received supply request SR includes at least a geographic indication GI (see Fig. 4) indicating a departure area or a destination area of the supplier 300. Further, the receiving entity 110 is configured to receive a demand request DR from an inquirer 200. The received demand request DR includes at least a geographic position GP (see Fig. 5) indicating a departure point or a destination point of the freight. The present server 100 is configured to provide a point-to-area matching of a demand request DR with at least one supply request SR. It is a point-to-area match, because the inquirer 200 can define its departure and destination as a point and the supplier 300 can define at least one of its departure and destination as an area.

The storing entity 120 is adapted to store a plurality of entries E. This plurality of entries E is shown in Fig. 2 with an E drawn in a circle. Each of the entries E stored in the storing entity 120 includes a certain geographic position GP and different administrative levels A0-A3 allocated to the certain geographic position GP. An example of such an entry E is depicted in Fig. 3. In particular, each of the different administrative levels A0-A3 allocated to the certain geographic position GP includes the certain geographic position GP. For example, a 0.th-order administrative level North America includes a first-order administrative level USA, which includes a second administrative level Oklahoma, which includes a third administrative level Oklahoma County, which includes a certain geographic position GP in Oklahoma County, for example Oklahoma City.

Further, for each entry E, the storing entity 120 may be configured to store the certain geographic position GP and the hierarchy of the different administrative levels A0-A3 allocated to the certain geographic position GP, in particular, the hierarchy may be ordered by the above-mentioned 0.-order to 3.-order (see Fig. 3).

For providing proper matches, the hierarchy allocated to the certain geographic position GP may include at least three different administrative levels A0-A3.

Moreover, for each entry E, the storing entity 120 may be adapted to store the geographic position GP, the different administrative levels A0-A3 allocated to the certain geographic position GP and at least one administrative level adjoining to at least one of the different administrative levels A0-A3 allocated to the certain geographic position GP.

The allocating entity 130 is adapted to allocate the geographic position GP of the demand request DR to one entry E in the storing entity 120. In particular, the allocating entity 130 may query the storing entity 120, e.g. a database, by means of the geographic position GP for receiving the allocated entry AE. The allocation entity 130 provides the allocated entry AE and the geographic indication GI of the supply request SR to the matching entity 140.

The matching entity 140 is adapted to match the allocated entry AE with the geographic indication GI of each of the received supply requests SR for providing a matching result MR between the received demand request DR and the received supply request SR. As shown in Fig. 1, the matching result or matching results MR are provided to the clients, namely the inquirer 200 and the supplier 300.

Further, Fig. 4 shows a schematic block diagram of an embodiment of a supply request SR. The supply request SR includes at least a first geographic indication GI1 indicating a departure of the supplier 300 and a second geographic indication GI2 indicating the destination of the inquirer 200. Further, the supply request SR includes a transport capacity TC indicating the actual capacity of the transport means of the supplier 300.

At least one of the geographic indications GI1, GI2 describes or indicates an area and not a position, e.g. Brandenburg, but not Potsdam. For example, the first geographic indication GI1 indicates a departure area and the second geographic indication GI2 also indicates a destination area. As an alternative, the first geographic indication GI1 indicates a departure point and the second geographic indication indicates a destination area. As a further alternative, the first geographic indication GI1 indicates a departure area, wherein the second geographic indication GI2 indicates a destination point.

Further, Fig. 5 shows a schematic block diagram of a demand request DR including a first geographic position GP1 indicating a departure point of the freight and a second geographic position GP2 indicating a destination point of the freight. Further, the demand request DR may include a transport request TR indicating the necessary transport capacity.

For the case of Figs. 4 and 5, the receiving entity 110 of Fig. 1 may be configured to receive a supply request SR with first and second geographic indications GI1, GI2 and a demand request DR with first and second geographic positions GP1, GP2.

Furthermore, in the case of Figs. 4 and 5, the allocating entity 130 may be equipped with first allocating means and second allocating means. The first allocating means are adapted to allocate the first geographic position GP1 to a first entry in the storing entity 120, wherein the second allocating means are adapted to allocate the second geographic position GP2 to a second entry in the storing entity 120.

In an analogous way, the matching entity may be equipped with first matching means and second matching means. The first matching means may be adapted to match the first entry allocated to the first geographic position GP1 with the first geographic indication GI1 of each of the received supply requests SR. Furthermore, the second matching means may be adapted to match the second entry allocated to the second geographic position GP2 with the second geographic indication GI2 of each of the received supply requests SR.

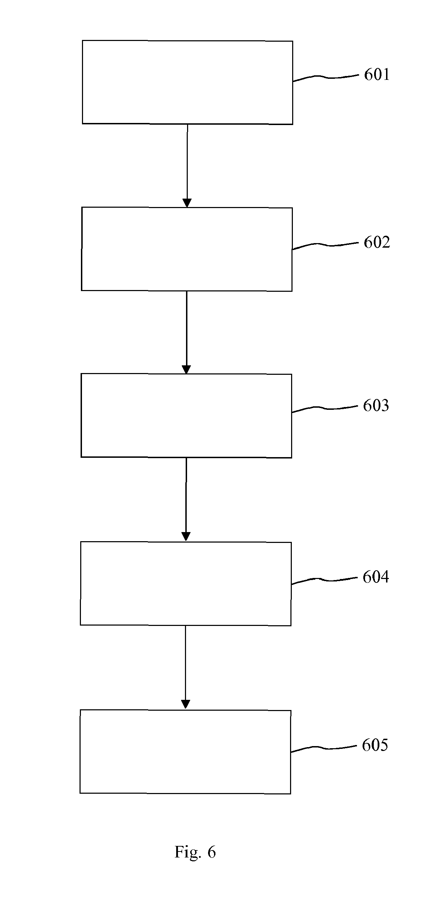

In Fig. 6, an embodiment of a sequence of method steps for matching a demand request for transport capacity from an inquirer with at least one supply request for offering the transport capacity from a supplier is depicted. The method of Fig. 6 includes the following steps 601-606.

In step 601, supply requests are received from a plurality of suppliers. A respective supply request of the received supply requests includes a geographic indication indicating a departure area or a destination area of the supplier.

In step 602, a demand request is received from the inquirer. The received demand request includes a geographic position indicating a departure point or a destination point of the freight.

In step 603, a plurality of entries is stored in a storing entity, e.g. a database. Each of the entries includes a certain geographic position and different administrative levels allocated to a certain geographic position.

In step 604, the geographic position included in the received demand request is allocated to one entry in the storing entity.

In step 605, the entry allocated to the geographic position is matched with the geographic indication of each of the received supply requests for providing a matching result between the received demand request and the received supply requests.

Said steps 601-605 may be embodied in functions, part of programs or programs forming a computer program or computer program product. Such a computer program product may be configured to be executed on at least one computer.

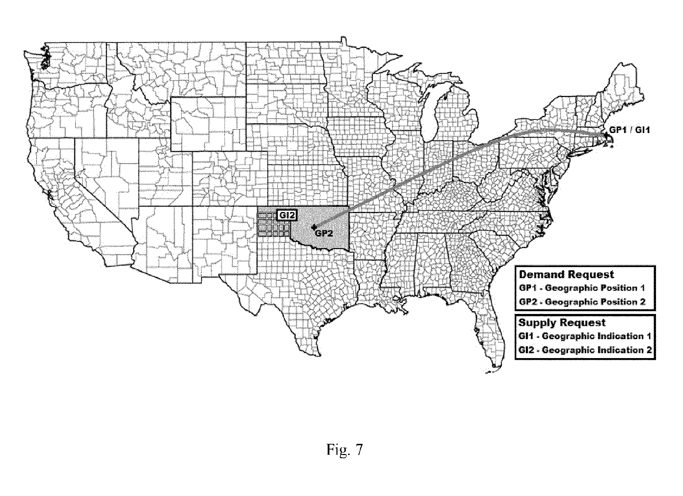

Fig. 7 shows a map of the United States illustrating a match of a demand request DR for a transport capacity with a supply request SR for offering the transport capacity.

In the example of Fig. 7, the demand request DR includes a first geographic position GP1 indicating the departure point Boston of the freight and a second geographic position GP2 indicating the destination point Oklahoma City of the freight.

Further, the supply request SR includes a first geographic indication GI1 indicating the departure point Boston of the supplier and a second geographic indication GI2 indicating the destination area Oklahoma and neighboring counties in Texas for the supplier. Because of the present geographical circumstances of the neighboring states Oklahoma and Texas, it is beneficial to use not only Oklahoma for the second geographic indication GI2, but also certain neighboring counties in Texas, namely Dallam, Sherman, Hansford, Ochiltree, Lipscomb, Hartley, Moore, Hutchinson, Roberts, Hemphill, Oldham, Potter, Carson, Gray, Wheeler, Deaf Smith, Randall, Armstrong, Donley, and Collingsworth (see GI2 in Fig. 7).

As mentioned above, the different administrative levels are ordered such that the i-th administrative level includes the (i+1)-th administrative level. For the entry in the storing entity 120 including the geographic position GP2 Oklahoma City: Oklahoma City is included in Oklahoma County, which is included in Oklahoma, which is included in the USA, which is included in North America. For the present second geographic position GP2 Oklahoma City, the entry allocated to Oklahoma City is matched to the present second geographic indication GI2 by the matching entity 140.

As a result, the example of Fig. 7 shows a point-to-point match for the departure, namely GP1 Boston to GI1 Boston, and a point-to-area match for the destination, namely GP2 Oklahoma City to GI2 Oklahoma and the above mentioned certain neighboring counties in Texas, Dallam, Sherman, Hansford, Ochiltree, Lipscomb, Hartley, Moore, Hutchinson, Roberts, Hemphill, Oldham, Potter, Carson, Gray, Wheeler, Deaf Smith, Randall, Armstrong, Donley, Collingsworth.

### REFERENCE SIGNS

- 100: server
- 110: receiving entity
- 120: storing entity
- 130: allocating entity
- 140: matching entity
- 200: inquirer
- 300: supplier
- 601: receiving
- 602: receiving
- 603: storing
- 604: allocating
- 605: matching

- AE: allocating entry
- A0: administrative level of 0.order
- A1: administrative level of 1.order
- A2: administrative level of 2.order
- A3: administrative level of 3.order
- DR: demand request
- E: entry
- GI: geographical indication
- GI1: first geographical indication
- GI2: second geographical indication
- GP: geographic position
- GP1: first geographical position
- GP2: second geographical position
- MR: matching result
- SR: supply request
- TC: transport capacity
- TR: transport request

## Claims

1. A server (100) for matching a demand request (DR) for a transport capacity (TC) for a freight from an inquirer (200) with at least one supply request (SR) for offering the transport capacity (TC) from a supplier (300), the server (100) comprising:
a receiving entity (110) for receiving supply requests (SR) from a plurality of suppliers (300), wherein a respective supply request (SR) of the received supply requests includes a geographic indication (GI) indicating a departure area or a destination area of the supplier (300), and for receiving a demand request (DR) from the inquirer (200), wherein the received demand request (DR) includes a geographic position (GP) indicating a departure point or a destination point of the freight,
a storing entity (120) for storing a plurality of entries (E), wherein each of the entries (E) includes a certain geographic position (GP) and different administrative levels (A0, A1, A2, A3) allocated to the certain geographic position (GP),
an allocating entity (130) for allocating the geographic position (GP) included in the received demand request (DR) to one entry (E) in the storing entity (120), and
a matching entity (140) for matching the entry (AE) allocated to the geographic position (GP) with the geographic indication (GI) of each of the received supply requests (SR) for providing a matching result (MR) between the received demand request (DR) and the received supply requests (SR).

2. The server of claim 1,
wherein each of the different administrative levels (A0, A1, A2, A3) allocated to the certain geographic position (GP) includes the certain geographic position (GP).

3. The server of claim 1 or 2,
wherein the receiving entity (110) is configured to receive supply requests (SR) from a plurality of suppliers (300), wherein the respective supply request (SR) of the received supply requests (SR) includes a first geographic indication (GP1) indicating a departure area of the supplier (300) and a second geographic indication (GP2) indicating a destination area of the supplier (300), and to receive a demand request (DR) from the inquirer (200), wherein the received demand request (DR) includes a first geographic position (GP1) indicating a departure point of the freight and a second geographic position (GP2) indicating a destination point of the freight.

4. The server of claim 1 or 2,
wherein the receiving entity (110) is configured to receive supply requests (SR) from a plurality of suppliers (300), wherein the respective supply request (SR) of the received supply requests (SR) includes a first geographic indication (GI1) indicating a departure point of the supplier (300) and a second geographic indication (GI2) indicating a destination area of the supplier (300), and to receive a demand request (DR) from the inquirer (200), wherein the received demand request (DR) includes a first geographic position (GP1) indicating a departure point of the freight and a second geographic position (GP2) indicating a destination point of the freight.

5. The server of claim 1 or 2,
wherein the receiving entity (110) is configured to receive supply requests (SR) from a plurality of suppliers (300), wherein the respective supply request (SR) of the received supply requests (SR) includes a first geographic indication (GI1) indicating a departure area of the supplier (300) and a second geographic indication (GI2) indicating a destination point of the supplier (300), and to receive a demand request (DR) from the inquirer (200), wherein the received demand request (DR) includes a first geographic position (GP) indicating a departure point of the freight and a second geographic position (GP) indicating a destination point of the freight.

6. The server of one of claims 3 to 5,
wherein the allocating entity (130) includes first allocating means and second allocating means, wherein the first allocating means are configured to allocate the first geographic position (GP1) to a first entry (E) in the storing entity (120), and wherein the second allocating means are configured to allocate the second geographic position (GP2) to a second entry (E) in the storing entity (120).

7. The server of claim 6,
wherein the matching entity (140) includes first matching means and second matching means, wherein the first matching means are configured to match the first entry (AE) allocated to the first geographic position (GP1) with the first geographic indication (GI1) of each of the received supply requests (SR), and wherein the second matching means are configured to match the second entry (E) allocated to the second geographic position (GP2) with the second geographic indication (GI2) of each of the received supply requests (SR).

8. The server of one of claims 1 to 7,
wherein, for each entry (E), the storing entity (120) is configured to store the certain geographic position (GP) and a hierarchy of the different administrative levels (A0, A1, A2, A3) allocated to the certain geographic position (GP).

9. The server of claim 8,
wherein the hierarchy allocated to the certain geographic position (GP) includes at least three different administrative levels (A0, A1, A2, A3).

10. The server of one of claims 1 to 9,
wherein, for each entry (E), the storing entity (120) is configured to store the geographic position (GP), the different administrative levels (A0, A1, A2, A3) allocated to the certain geographic position (GP) and at least one neighboring administrative level adjoining to at least one of the different administrative levels (A0, A1, A2, A3) allocated to the certain geographic position (GP).

11. The server of one of claims 1 to 10,
wherein the geographic indication (GI) included in the supply request (SR) includes at least one of a full name of the geographic indication, a zip code of the geographic indication or a part of a zip code of the geographic indication, in particular a sequence of the first numbers of the zip code.

12. The server of one of claims 1 to 11,
wherein the storing entity (120) includes a first database for storing the received demand requests and matched supply requests (SR), a second database for storing the plurality of entries, and a querying entity which is configured to query the first database firstly and, if negative, the second database secondly.

13. A method for matching a demand request (DR) for a transport capacity (TC) for a freight from a inquirer (200) with at least one supply request (SR) for offering the transport capacity (TC) from a supplier (300), the method comprising:
receiving (601) supply requests (SR) from a plurality of suppliers (300), wherein a respective supply request (SR) of the received supply requests (SR) includes a geographic indication (GI) indicating a departure area or a destination area of the supplier (300),
receiving (602) a demand request (DR) from the inquirer (200), wherein the received demand request (DR) includes a geographic position (GP) indicating a departure point or a destination point of the freight,
storing (603) a plurality of entries (E), wherein each of the entries (E) includes a certain geographic position (GP) and different administrative levels (A0, A1, A2, A3) allocated to the certain geographic position (GP),
allocating (604) the geographic position (GP) included in the received demand request (DR) to one entry (E) in the storing entity (120), and
matching (605) the entry (AE) allocated to the geographic position (GP) with the geographic indication (GI) of each of the received supply requests (SR) for providing a matching result (MR) between the received demand request (DR) and the received supply requests (SR).

14. A computer program comprising a program code for executing the method of claim 13 for matching a demand request (DR) for a transport capacity (TC) from a inquirer (200) with at least one supply request (SR) for offering the transport capacity (TC) from a supplier (300) when run on at least one computer.
